# EUROPEAN PATENT SPECIFICATION

(11) **EP 1 476 852 B1**
(45) Date of publication and mention of the grant of the patent: **27.02.2008**
(21) Application number: 03737350.3
(22) Date of filing: 31.01.2003
(51) Int. Cl.: G06T 7/20, G08B 13/19

(54) **SENSOR WITH OBSCURANT DETECTION**
SENSOR MIT ERKENNUNG VON VERDECKUNGEN
CAPTEUR POUVANT DETECTER LA PRESENCE D'OBSCURCISSANTS

(30) Priority: 02.02.2002 GB 0202467
(43) Date of publication of application: 17.11.2004
(73) Proprietor: QinetiQ Limited, London, SW1E 6PD (GB)
(72) Inventor: KAUSHAL, Tej Paul, Malvern, Worcestershire WR14 3PS (GB); MANNING, Paul Antony, Malvern, Worcestershire WR14 3PS (GB)
(74) Representative: Davies, Philip
(86) International application number: PCT/GB2003/000413
(87) International publication number: WO 2003/067522

(56) References cited:
- EP-A- 0 507 025
- EP-A- 1 079 351
- WO-A-00/73996
- US-A- 4 752 768
- US-A1- 2001 024 513

## Description

This invention relates to a sensor having a obscurant detection system and to a method for determining whether the field of view of a sensor has been obscured.

Sensors are used for a variety of security and safety applications, for instance fire detection or intruder detection. Often these sensors employ thermal detectors.

One type of thermal detector commonly used is the single element pyroelectric detector, often referred to as passive infrared (PIR) sensors. These sensors are designed to give a response to the thermal signature of a moving body or bodies within a certain field of view. Typically the sensitivity and field of view of such sensors is designed for a specific application. For example, intruder alarms or automated lighting systems are generally designed to be triggered by movement of a human body.

PIR sensors are vulnerable to being obscured or masked however. Such masking could be deliberate, for instance by covering the sensor with an infrared opaque material or spraying the window with such a material and could be done covertly. The only way to test whether a sensor is working or not is to try to trigger a response, say by walking around the room. This needs positive action to test however and depending on the sensitivity of the sensor may not be possible. For instance a sensor could be designed to detect fires but ignore human movement and would therefore require an intense IR source to test the function. The sensor may also be obscured unintentionally, for instance by moving furniture or other material into the field of view.

US Patent US6,239,698 describes a detector array having a mask warning capability. Here the sensor has a detector array and a read out means monitors signals from all the detectors in the array. When the sensor is masked the majority of the detectors will show a significant transient change in signal. The sensor monitors for such a transient change across all detector elements and when such a change is detected generates a signal indicating that the detector may be masked.

Such a system only functions correctly however when the act of masking the sensor is within the defined threshold. If the sensor did not detect the introduction of the obscurant into the field of view then the presence of the mask may go unnoticed.

U.S. patent application US 2001/024513 A1 describes a surveillance apparatus forming a difference image between an actual and a stored image and judging a change in the actual image, i.e. the existence/absence of an invading body, from the difference image.

International patent application WO 00/73996 A describes a moving object tracking apparatus comparing an acquired and stored background image with an actual image to determine the position of the moving object to be tracked.

Thus according to the present invention there is provided a sensor comprising an array of detector elements, a memory for storing an image from the detector array in an unmasked condition and a processing means for periodically comparing the actual image from the detector elements with the stored image and generating an alarm if the actual image is significantly different from the stored image.

The term image is taken to mean the output of all the detector elements and does not necessarily imply a recognisable or high quality image. Also it is not necessary for such an image to actually be displayed anywhere.

The output of each detector element will depend upon the part of the scene which it sees. Usually the scene will consist of features with different radiative properties and therefore in a normal condition the outputs of different detectors will be different. This normal output or image can be stored in memory. If a mask is introduced the detectors will no longer see the scene but will instead see only the mask. This will change the output of the detector array. The image of the mask will therefore be different to the stored image and this can be used to trigger an alarm informing that the sensor may be masked.

Preferably the processor compares spatial features in the stored and actual images. The normal scene of the detector will generally comprise a number of features. For instance a sensor mounted in a room may have a field of view including a corner of a room, a door and some furniture items. Conversely a masked scene may be predominately featureless. The absence of features previously present can then be used as an indication that the sensor has been masked.

Preferably the amount of high spatial frequency structure in the stored image and actual image is compared. By high spatial frequency is meant features which exhibit a sharp contrast in neighbouring 'pixels' in the image, for instance as found at the edges of objects. High spatial frequency in the image is generally associated with physical objects in the scene which can be permanent and therefore used as a reliable guide to detect any masking.

Conveniently the stored image is a map of areas of high spatial frequency detail in the image and the processor analyses the actual image to see if the areas of high spatial frequency detail are present.

If the high spatial frequency detail is missing from a large part of the image this can indicate that the sensor is masked and the processor can generate an alarm.

Conveniently the image from the detector array is high pass filtered. High pass filtering accentuates edges within the image. The image is then preferably temporally averaged over a number of frames to remove dynamic noise. The time averaged high pass filtered image may then be convolved with line segment kernels in a range of orientations to determine areas of high spatial frequency detail.

Usefully the detector array comprises a thermal detector array. The detector array may be a micro-bolometer array.

The detector array need not have a huge number of elements, a 64 by 64 array is sufficient.

The processor may automatically compare the stored image and the actual image at regular intervals or a test phase could be initiated by a user.

The stored image may be acquired on start up of the sensor for the first time. If the memory was empty the sensor could automatically acquire and store an image. The processor may also be adapted to replace the stored image with a newly captured image in response to a control signal. In this way if significant changes are made to the room the sensor is in a new image can be acquired and used in the future.

The processor could also be adapted to modify the stored image on the basis of later acquired images. Even where a sensor has not been masked there may be some differences between the stored image and the actual image. For instance some items within a room, such as furniture may be moved from time to time. However the rest of the image, walls, doors etc might be the same. In such case the alarm may not trigger but the stored image may be refined to relate just to those areas that don't change. In this way susceptibility to false alarms may be reduced and confidence in the masking alarm improved.

In another aspect there is provided a method of determining whether the normal field of view of a sensor comprising an array of detector elements is obscured comprising the steps of, taking a current image from the sensor, comparing the acquired image with a previously acquired image of the normal field of view, determining whether there is any significant difference between the two images and activating an alarm when there is a significant difference.

Preferably the method includes the step of applying a high pass filter to the acquired image. Further preferably the method includes the step of temporally averaging a series of frames to form the acquired image. The step of comparing the acquired and stored images is conveniently performed by locating the area of high spatial frequency detail in the acquired image and comparing it to the location of high spatial frequency detail of the stored image. Significant absence of high spatial frequency detail in the acquired image which is present in the stored image is used to trigger the alarm.

The image acquired may be a thermal image and may be a 64 by 64 pixel image.

The invention will now be described by reference to the following drawings of which;
Figure 1 shows a sensor according to the present invention,
Figure 2a shows a thermal image generated from a detector as shown in Figure 1 and Figure 2b shows the same image where the areas of high spatial frequency have been identified.
Figure 3 shows a flow chart of the operation of the device of the current method.

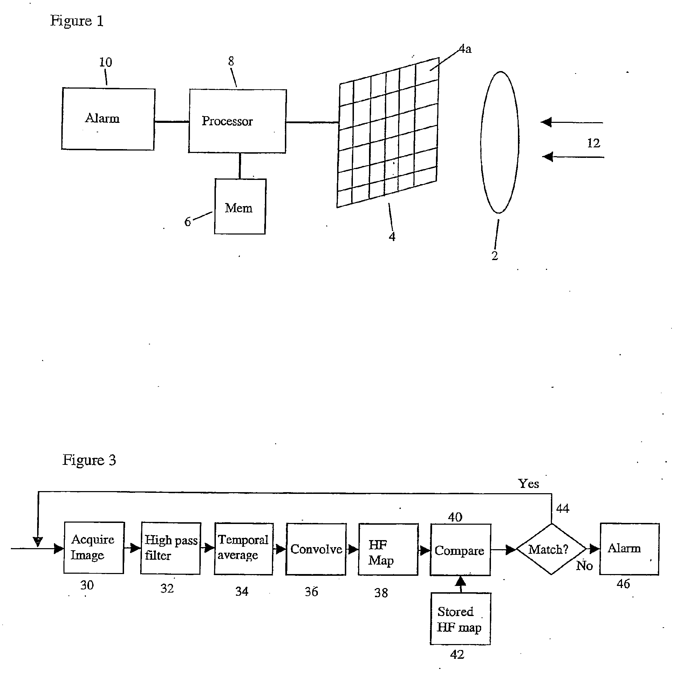

Turning now to figure 1 a detector array 4 has radiation 12 from a scene focussed thereon by optics 2. The detector array is a micro-bolometer array for detecting infrared radiation of say 64 by 64 elements. The output from each element 4a in the array is dependent upon the intensity of infrared radiation arriving at that part of the array from the scene.

The output from the array is fed to processor 8. Processor 8 could be located with the detector array 4 in the same housing or could be located remotely. A single processor could be linked to several different detector arrays. The processor 8 could also be the same processor that controls the sensor functionality, for instance movement detection.

Processor 8 is linked with memory 6. Memory 6 stores the processed image acquired from the normal field of view of the sensor. The processor 8 includes a clock (not shown) and, at regular intervals, perhaps once every day, compares the current image with the previously acquired image stored in the memory 6 in the manner as will be described below with reference to figure 3. If there is no significant difference in the images nothing happens. However if there are significant differences the processor 8 activates alarm 10 to indicate that the sensor may be masked.

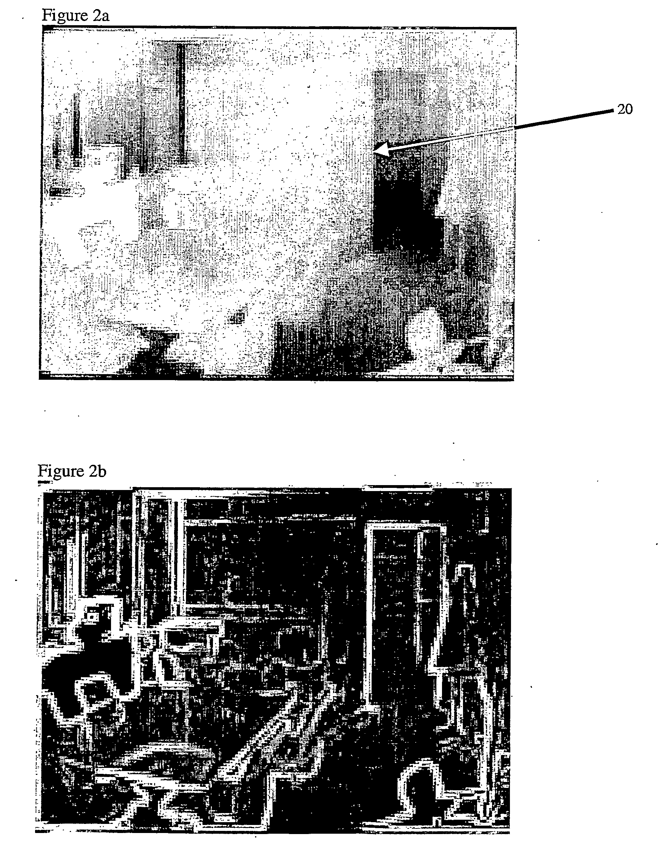

Figure 2a shows a typical image acquired by a thermal detector array as shown in Figure 1. It can be seen that the image shows a room. The doorway to the room and a table are clearly noticable. The edges 20 of objects within the room are high spatial frequency features. It can be seen that the left edge of the doorway for instance is a strong edge and that there is a sharp contrast between the pixels on either side of this edge. Other strong edges can be seen at the edge of the table top or the corner of the room. The presence of these features can be used to determine if the sensor has been masked. Where a mask of infrared opaque material has been placed across the whole of the sensor's field of view the thermal image is likely to be approximately uniform across the whole of the sensors field of view and high spatial frequency features will be missing. Even where there are some high frequency features the location is unlikely to match those of the scene.

Figure 2b highlights the areas of high spatial frequency detail in the image. The edges of the doorway, the table and the room corner all contribute to the high spatial frequency detail. This map of high frequency detail can be stored by the sensor and compared against future images as described below.

The thermal image generated is dependant upon the thermal distribution of the room, which has both high and low spatial frequency structure. The actual captured image will also however have contributions from static pixel independent noise which is fixed pattern noise from detector non-uniform responses. There will also be dynamic pixel independent noise and dynamic line structure noise arising from power supplier, multiplexers etc.

Referring to figure 3 the image is acquired 30 and is then processed to identify the high spatial frequency features. First the acquired image is high pass filtered 32, as is well understood by those skilled in the art. This accentuates edges within the image but also increases the effect of the noise sources mentioned. The high pass filtered images are then temporally averaged 34 over successive frames to remove dynamic noise. The high spatial frequency edges have some extension in image space whereas the fixed pattern noise has no such structure. The image therefore consists of lines, curves and smaller edge segment as well as the noise. The processed image is therefore convolved 36 with line segment kernels in a range of orientations to determine those areas of the image which contain high frequency detail. Details of how to convolve the image in this way would be well understood by a person skilled in the art. A map of high frequency detail in the acquired image is then produced 38 and compared 40 with a stored image 42. The stored image is again a map of high spatial frequency structured obtained using the same processing on an image acquired of the sensor's normal field of view. Figure 2b is an example of such a map of high spatial frequency detail.

Where the two maps are substantially the same 44 no further action is taken until the next image is to be acquired. However where there are substantial differences, i.e. high frequency detail is missing from a majority of the image, then an alarm is activated to warn that the sensor may be masked. The alarm could take any number of forms, for instance a warning light on a control panel could light or the sensor could be equipped with an audible alarm.

Whilst a particular type of infrared detector has been described the invention is applicable to other types of detector array including uv or visible arrays.

## Claims

1. A sensor comprising an array (4) of detector elements (4a), a memory (6) for storing an image from the detector array (4) in an unmasked condition and a processing means (8) for periodically comparing the actual image from the detector elements with the stored image and generating an alarm (10) if the actual image is significantly different from the stored image **characterised in that** the processor is adapted to compare the amount of high spatial frequency structure in the stored image and actual image.

2. A sensor as claimed in claim 1 wherein the stored image is a map (42) of areas of high spatial frequency detail in the image and the processor (S) analyses the actual image to determine if the areas of high spatial frequency detail are present.

3. A sensor as claimed in claim 2 wherein the processor (8) generates an alarm if the high spatial frequency detail present in the stored image is missing from a large part of the actual image.

4. A sensor as claimed in any preceding claim wherein the processor is adapted to high pass filter (32) the actual image (30).

5. A sensor as claimed in claim 4 wherein the processor is adapted to temporally average (34) the actual image (30) over a number of frames to remove dynamic noise.

6. A sensor as claimed in claim 5 wherein the processor is adapted such that the time averaged high pass filtered image is convolved (36) with line segment kernels in a range of orientations to determine areas of high spatial frequency detail.

7. A sensor as claimed in any preceding claim wherein the detector array comprises a thermal detector array.

8. A sensor as claimed in claim 7 wherein the detector array is a micro-bolometer array.

9. A sensor as claimed in any preceding claim wherein the detector array is a 64 by 64 array.

10. A sensor as claimed in any preceding claim wherein the processor automatically compares the stored image and the actual image at regular intervals.

11. A sensor as claimed in any preceding claim wherein the processor is adapted to acquired the stored image on start up of the sensor for the first time.

12. A sensor as claimed in any preceding claim wherein the processor is adapted to replace the stored image with a newly captured image in response to a control signal.

13. A method of determining whether the normal field of view of a sensor comprising an array of detector elements is obscured comprising the steps of, taking a current image (30) from the sensor (4), comparing (40) the acquired image with a previously acquired image (42) of the normal field of view, determining whether there is any significant difference between the two images and activating (46) an alarm (10) when there is a significant difference **characterised in that** the step of comparing the acquired and stored images comprises the steps of locating the area of high spatial frequency detail in the acquired image and comparing it to the location of high spatial frequency detail of the stored image.

14. A method as claimed in claim 13 wherein the method includes the step of applying a high pass filter (32) to the acquired image.

15. A method as claimed in claim 13 or claim 14 wherein the method includes the step of temporally averaging (34) a series of frames to form the acquired image.

16. A method as claimed in any of claims 13-15 wherein the image acquired is a thermal image.

## Patentansprüche

1. Sensor, welcher ein Array (4) von Detektorelementen (4a), einen Speicher (6) zur Speicherung eines vom Detektor-Array (4) im nicht abgedeckten Zustand erzeugten Bildes und eine Prozessor-Einrichtung (8) für einen periodischen Vergleich des aktuellen Bildes der Detektorelemente mit dem gespeicherten Bild und zur Erzeugung eines Alarms (10) umfaßt, wenn das aktuelle Bild signifikant vom gespeicherten Bild abweicht,
**dadurch gekennzeichnet,**
**dass** die Prozessor-Einrichtung derart ausgebildet ist, dass der Betrag der Struktur mit hoher Raumfrequenz im gespeicherten Bild und im aktuellen Bild miteinander verglichen wird.

2. Sensor nach Anspruch 1, bei dem das gespeicherte Bild eine Karte (42) der Bereiche mit Details hoher Raumfrequenz im Bild ist und der Prozessor (8) das aktuelle Bild analysiert, um zu bestimmen, ob die Bereiche mit Details hoher Raumfrequenz vorhanden sind.

3. Sensor nach Anspruch 2, bei dem die Prozessor-Einrichtung (8) einen Alarm erzeugt, wenn das im gespeicherten Bild vorhandene Detail mit hoher Raumfrequenz in einem großen Teil des aktuellen Bildes nicht vorhanden ist.

4. Sensor nach einem der vorhergehenden Ansprüche, bei dem die Prozessor-Einrichtung so ausgebildet ist, dass das aktuelle Bild (30) hochpaßgefiltert (32) wird.

5. Sensor nach Anspruch 4, bei dem die Prozessor-Einrichtung so ausgebildet ist, dass das aktuelle Bild (30) zur Entfernung des dynamischen Rauschens über eine Reihe von Rahmen zeitlich gemittelt wird (34).

6. Sensor nach Anspruch 5, bei dem die Prozessor-Einrichtung so ausgebildet ist, dass das zeitlich gemittelte und hochpaßgefilterte Bild mit Liniensegment-Kernels zur Bestimmung von Bereichen mit Details hoher Raumfrequenz in einem Bereich von Orientierungen gefaltet wird (36).

7. Sensor nach einem der vorhergehenden Ansprüche, bei dem das Detektor-Array ein Array von thermischen Detektoren ist.

8. Sensor nach Anspruch 7, bei dem das Detektor-Array ein Mikrobolometer-Array ist.

9. Sensor nach einem der vorhergehenden Ansprüche, bei dem das Detektor-Array ein Array von 64 x 64 ist.

10. Sensor nach einem der vorhergehenden Ansprüche, bei dem die Prozessor-Einrichtung das gespeicherte Bild und das aktuelle Bild in regelmäßigen Abständen automatisch miteinander vergleicht.

11. Sensor nach einem der vorhergehenden Ansprüche, bei dem die Prozessor-Einrichtung so ausgebildet ist, dass sie das gespeicherte Bild zum ersten Mal beim Anfahren des Sensors erhält.

12. Sensor nach einem der vorhergehenden Ansprüche, bei dem die Prozessor-Einrichtung so ausgebildet ist, dass sie das gespeicherte Bild durch ein neues Bild als Reaktion auf ein Steuersignal ersetzt.

13. Verfahren zur Bestimmung, ob das normale Sichtfeld eines Sensors, der ein Array von Detektorelementen enthält, verdeckt ist, wobei das Verfahren die folgenden Schritte umfaßt:
- Aufnahme eines aktuellen Bildes (30) durch den Sensor (4),
- Vergleich (40) des erhaltenen Bildes mit einem früher erhaltenen Bild (42) des normalen Sichtfeldes,
- Bestimmung, ob es zwischen den zwei Bildern einen signifikanten Unterschied gibt, und
- Aktivierung (46) eines Alarms, wenn es einen signifikanten Unterschied gibt,
**dadurch gekennzeichnet, dass**
der Schritt des Vergleichs des erhaltenen und des gespeicherten Bildes die Schritte umfaßt:
- Auffinden des Bereichs mit Details hoher Raumfrequenz im erhaltenen Bild und
- Vergleich desselben mit der Lage der Details hoher Raumfrequenz im gespeicherten Bild.

14. Verfahren nach Anspruch 13, bei dem das Verfahren den Schritt der Verwendung eines Hochpaßfilters (32) beim erhaltenen Bild umfaßt.

15. Verfahren nach Anspruch 13 oder 14, bei dem das Verfahren zur Ausbildung des erhaltenen Bildes den Schritt der zeitlichen Mittelung (34) einer Reihe von Frames umfaßt.

16. Verfahren nach Anspruch 13 bis 15, bei dem das erhaltene Bild ein Wärmebild ist.

## Revendications

1. Capteur comprenant une matrice (4) d'éléments de détection (4a), une mémoire (6) pour stocker une image provenant de la matrice de détecteurs (4) dans une condition non masquée et un moyen de traitement (8) pour comparer périodiquement l'image réelle provenant des éléments de détection avec l'image stockée et générer une alarme (10) si l'image réelle est significativement différente de l'image stockée, **caractérisé en ce que** le processeur est adapté pour comparer la quantité de structure à fréquence spatiale élevée dans l'image stockée et l'image réelle.

2. Capteur selon la revendication 1, dans lequel l'image stockée est une carte (42) de zones de détail à fréquence spatiale élevée dans l'image et le processeur (8) analyse l'image réelle pour déterminer si les zones de détail à fréquence spatiale élevée sont présentes.

3. Capteur selon la revendication 2, dans lequel le processeur (8) génère une alarme s'il manque le détail à fréquence spatiale élevée présent dans l'image stockée sur une grande partie de l'image réelle.

4. Capteur selon l'une quelconque des revendications précédentes, dans lequel le processeur est adapté pour filtrer passe-haut (32) l'image réelle (30).

5. Capteur selon la revendication 4, dans lequel le processeur est adapté pour moyenner dans le temps (34) l'image réelle (30) sur un certain nombre de trames pour retirer un bruit dynamique.

6. Capteur selon la revendication 5, dans lequel le processeur est adapté de sorte que l'image filtrée passe-haut moyennée dans le temps est convoluée (36) avec des noyaux de segment de droite dans une plage d'orientations pour déterminer des zones de détail à fréquence spatiale élevée.

7. Capteur selon l'une quelconque des revendications précédentes, dans lequel la matrice de détecteurs comprend une matrice de détecteurs thermiques.

8. Capteur selon la revendication 7, dans lequel la matrice de détecteurs est une matrice de microbolomètres.

9. Capteur selon l'une quelconque des revendications précédentes, dans lequel la matrice de détecteurs est une matrice de 64 par 64.

10. Capteur selon l'une quelconque des revendications précédentes, dans lequel le processeur compare automatiquement l'image stockée et l'image réelle à des intervalles réguliers.

11. Capteur selon l'une quelconque des revendications précédentes, dans lequel le processeur est adapté pour acquérir l'image stockée lors du démarrage du capteur pour la première fois.

12. Capteur selon l'une quelconque des revendications précédentes, dans lequel le processeur est adapté pour remplacer l'image stockée par une image nouvellement saisie en réponse à un signal de commande.

13. Procédé pour à déterminer si le champ visuel normal d'un capteur comprenant une matrice d'éléments de détection est obscurci comprenant les étapes consistant à prendre une image actuelle (30) à partir du capteur (4), comparer (40) l'image acquise avec une image précédemment acquise (42) du champ visuel normal, déterminer s'il y a une différence significative entre les deux images et activer (46) une alarme (10) lorsqu'il y a une différence significative, **caractérisé en ce que** l'étape consistant à comparer les images acquise et stockée comprend les étapes consistant à situer la zone de détail à fréquence spatiale élevée dans l'image acquise et la comparer à l'emplacement de détail à fréquence spatiale élevée de l'image stockée.

14. Procédé selon la revendication 13, dans lequel le procédé comprend l'étape consistant à appliquer un filtre passe-haut (32) à l'image acquise.

15. Procédé selon la revendication 13 ou la revendication 14, dans lequel le procédé comprend l'étape consistant à moyenner dans le temps (34) une série de trames pour former l'image acquise.

16. Procédé selon l'une quelconque des revendications 13 à 15, dans lequel l'image acquise est une image thermique.
